# EUROPÄISCHE PATENTSCHRIFT

(11) **EP 0 956 271 B1**
(45) Veröffentlichungstag und Bekanntmachung des Hinweises auf die Patenterteilung: **19.09.2001**
(21) Anmeldenummer: 98905261.8
(22) Anmeldetag: 19.01.1998
(51) Int. Cl.: C02F 3/08, C02F 3/12, C02F 3/20, C02F 3/22

(54) **VORRICHTUNG ZUR INTENSIVIERTEN BIOLOGISCHEN ABWASSERAUFBEREITUNG**
DEVICE FOR INTENSIVE BIOLOGICAL WASTE-WATER TREATMENT
DISPOSITIF DE TRAITEMENT BIOLOGIQUE INTENSIF DES EAUX USEES

(30) Priorität: 24.01.1997 DE 19702521; 06.12.1997 DE 19754175
(43) Veröffentlichungstag der Anmeldung: 17.11.1999
(73) Patentinhaber: Agro Drisa Gmbh, 01326 Dresden (DE)
(72) Erfinder: BÖNISCH, Helmut, D-01477 Arnsdorf (DE); BRACHER, Peter, D-01612 Seu litz (DE); AUGUSTIN, Jürgen, D-01844 Neustadt (DE); HOLZ, Jürgen, D-01219 Dresden (DE)
(74) Vertreter: Heyner, Klaus, Dr.-Ing.
(86) Internationale Anmeldenummer: DE9800151
(87) Internationale Veröffentlichungsnummer: WO9832703

(56) Entgegenhaltungen:
- EP-A- 0 186 125
- EP-A- 0 785 172
- DE-A- 19 514 931
- PATENT ABSTRACTS OF JAPAN vol. 004, no. 106 (C-020), 30.Juli 1980 & JP 55 067391 A (MIURA ENG INTERNATL KK), 21.Mai 1980,
- PATENT ABSTRACTS OF JAPAN vol. 006, no. 098 (C-106), 8.Juni 1982 & JP 57 030596 A (KAYABA IND CO LTD), 18.Februar 1982, -& DATABASE WPI Section Ch, Week 8213 Derwent Publications Ltd., London, GB; Class A97, AN 82-24884 XP002065323
- PATENT ABSTRACTS OF JAPAN vol. 009, no. 108 (C-280), 11.Mai 1985 & JP 60 000890 A (OOSAKAFU;OTHERS: 01), 5.Januar 1985,
- PATENT ABSTRACTS OF JAPAN vol. 004, no. 046 (C-006), 10.April 1980 & JP 55 020604 A (NIPPON AUTO TOROOLE KK), 14.Februar 1980,

## Beschreibung

Die Erfindung betrifft eine Vorrichtung zur intensivierten biologischen Abwasseraufbereitung mit frei beweglichen Aufwuchstauchkörpern in Kombination mit Mischeinrichtungen. wahlweiser feinblasiger Belüftung oder Flüssigkeits-Gas-Gemischförderung mit wasserführenden Einbauten. Es werden frei bewegliche Aufwuchstauchkörper mit besiedlungsfreundlicher Oberfläche für die Immobilisation von spezifischen Mikroorganismen im Abwasserbereich eingesetzt.

Für die Reinigung von Abwässern in Kläranlagen werden verschiedene Verfahren angewandt. Bekannt sind das Belebtschlammverfahren ohne künstliche oder zusätzliche Aufwuchsflächen und eine Reihe von Verfahren, die Aufwuchsflächen gezielt in den Reaktoren einsetzen. Der Einsatz der sogenannten Trägerbiologie ist nötig. um die Klärprozesse zu intensivieren.
Dazu sind Tropfkörperverfahren. Tauchkörperverfahren. Festbettreaktoren und der Einsatz von schwimmenden oder schwebenden Biofilmträgem bekannt. Diese Reaktoren werden auch als Biofilmreaktoren bezeichnet.

Die Vor- und Nachteile der Verfahren sind in DD 285 333 A5 beschrieben. In der zitierten Schrift wird ein Verfahren vorgeschlagen. welches mit schwimmenden Biofilmträgern arbeitet. die zu 1/3 bis 2/3 über die Wasseroberfläche hinausragen. Für die Durchmischung und Benetzung der Aufwuchstauchkörper sorgt eine Welle in horizontaler Lage mit scheibenförmigen Körpern, insbesondere in Form einer Förderschnecke.

Ausgestaltungen von Tauchkörperverfahren sind vielgestaltig und in EP 29 19 221.
EP 0 198451 und in EP 0 385 011 beschrieben. Diesen Verfahren ist gemeinsam. daß sie einen rotierenden Tauchkörper besitzen. dessen Achse horizontal angeordnet ist. In der WO 92/01636 ist ein Verfahren beschrieben. welches in verschiedenen. räumlich voneinander getrennten Stufen nach dem Tauchkörperverfahren arbeitet.

In der Schrift WO 93/22244 und in JP-A 55 067 391 ist, ein Tauchkörperverfahren beschrieben, welches innerhalb von abgegrenzten Zonen des Rotationskörpers die Tauchkörper als frei bewegliche Aufwuchsträger beinhaltet.
Mit in einem Rotationskörper eingeschlossenen Aufwuchsträgern arbeitet auch die Lösung in WO 86/05770 und DE 195 14 931 A1. Bei letzterem Verfahren werden die Aufwuchsträger von unbeweglich am inneren Umfang einer Zylindertrommel angeordneten Schaufeln bewegt.
Ein ähnliches Verfahren wird in EP 32 38 366 vorgeschlagen, hier sind die Aufwuchsträger in Kammern festbettähnlich angeordnet und das rotierende Festbett ist wechselweise von Luft und Abwasser durch den veränderlichen Pegel des Abwassers umgeben. Weiterhin ist die Trennung in verschiedene Zonen beschrieben und auch apparativ vorgegeben.

Die Kompaktierung der Aufwuchsflächen von Tauchkörperanlagen in den kritischen Zonen bewirkt Funktionsstörungen bei der Durchmischung und Abscheidung und führt zu einer Reduzierung der Reinigungsleistung und ist als Nachteil der Trägerfixierung zu nennen. Bei dicken Biofilmen ist die Diffusion begrenzt und die Verstopfungsgefahr der Träger groß. Die Abbauprozesse sind dann schwer steuerbar.
Deshalb werden konventionelle Belebtschlammverfahren trotz des hohen Flächenbedarfs am häufigsten realisiert.

Weitere wichtige Kriterien für die Effektivität von Klärprozessen sind die Durchmischung und der Luffemtrag beim Prozeß. Dafür werden ebenfalls verschiedene Lösungen beschrieben. In DE 42 38 912 A1 wird die Konstruktion eines Rotationssystems vorgeschlagen, durch welches auf einfache Art und Weise Turbulenzen und Lufteintrag ermöglicht werden.

Bereits angesprochen wurden die verschiedenen Abbaureaktionen mit ihren unterschiedlichen Abbaubedingungen und damit verbunden, den spezifischen Reaktionszonen. Die zonale Trennung von Phosphor und Stickstoffelimination wird beispielsweise in DE 4409 435 beschrieben.
Es gibt Ansätze, die Vorteile verschiedener Verfahren zu verbinden, zum Beispiel die des Tauchkörperverfahrens und des Belebtschlammverfahrens. Ein solches Verfahren ist als Stählermatic-Verfahren bekannt. Die Kombination von Vorteilen ist nötig, um steigenden Anforderungen an Einleitwerten von Abwässern gerecht zu werden und dem Tatbestand Rechnung zu tragen, daß räumliche Erweiterungen der Kläranlagen aus Kosten und Platzgründen meist nicht möglich sind.

Ausgehend von diesem Stand der Technik liegt der Erfindung die Aufgabe zu Grunde, eine Intensivierung des Klärprozesses zu erreichen. Weiterhin soll ein maximaler Anteil gut verteilter und verstopfungsfreier Bewuchsflächen im Belebungsbecken bei energetisch optimierter Belüftung realisiert werden.

Die erfindungsgemäße Konzeption geht aus von einer wahlweisen Kombination von Vorrichtungselementen für das Belebtschlammverfahren mit feinblasiger Belüftung oder Flüssigkeits-Gas-Gemischförderung, sowie für das Verfahren mit frei beweglichen Aufwuchstauchkörpem und einer speziellen Mischeinrichtung.

Im gesamten Abwasserbehandlungsbecken sind frei bewegliche Aufwuchstauchkörper als Biofilmträger mit aktivierter Oberfläche für die Immobilisation von spezifischen Mikroorganismen in Kombination mit suspendierten Belebtschlammflocken eingebracht und erhöhen die Konzentration von biologisch aktiven Mikroorganismen gegenüber einem Becken mit ausschließlich suspendiertem Belebtschlamm. Das Abwasserbehandlungsbecken wird vom Abwasser durchströmt und enthält eine Rückhaltevorrichtung für die frei beweglichen Aufwuchstauchkörper.

Durch mechanische Einwirkungen einerseits und biologischen Aufwuchs andererseits wird eine Biofilmstärke auf den Aufwuchsträgem erreicht, die ein günstiges Verhältnis von Oberfläche und Belüftungsintensität ermöglicht, wobei Aufwuchs und Ablösen bzw. Abrieb in ein Gleichgewicht gebracht wird, das einen optimalen Stofftransport in relativ dünnen Biofilmen und eine relative Gleichverteilung der immobilisierten Mikroorganismen auf den Bewuchsflächen erzielt.

Die Bewegung der Mischeinrichtung begrenzt das Dickenwachstum des Biofilms auf den frei beweglichen Aufwuchstauchkörpern mit Hilfe der mechanischen Beanspruchung der relativ zueinander bewegten Aufwuchstauchkörper infolge Turbulenz und Abrieb und sorgt somit für die Optimierung von Stofftransport, Sauerstoffversorgung und Abbauleistung.

Durch den erfindungsgemäßen Aufbau der Anlage werden die wirksamen Bewuchsflächen bei verbesserten Besiedlungsbedingungen für spezielle Mikroorganismen vergrößert. Das wird durch den Einsatz spezieller Materialien für die Aufwuchstauchkörper, wie Xylith und HDPE-REC realisiert.
Weiterhin wird als Material für die frei beweglichen Aufwuchstauchkörper und für in die Vorrichtung integrierte Aufwuchsflächen modifiziertes Polypropylen eingesetzt. Die Geometrie der Paddel der Mischeinrichtung ist dabei so gestaltet, daß die Paddel größere Mengen Aufwuchstauchkörper bewegen und aus dem Wasser herausheben können, in den Paddeln Aufwuchsflächen für Mikroorganismen vorgesehen werden können und die Sauerstoffversorgung der Mikroorganismen zusätzlich durch Luftanreicherung von Rücklaufschlamm verbessert wird. Die Mischeinrichtung besteht dabei aus strahlenförmigen Trägern, welche mit Paddeln versehen sind, die in unterschiedlichem Abstand zum Mittelpunkt der Mischeinrichtung angeordnet sind.

Des weiteren kann zur Erhöhung der Sauerstoffausnutzung bei Lufteintrag in den Rücklaufschlamm im unteren Teil des Abwasserbehandlungsbeckens eine Zwangsführung des mit Luft angereicherten Gemisches aus Rücklaufschlamm und Abwasser in Kanälen erfolgen. Die Wandungen dieser Kanäle weisen dabei eine für Mikroorganismen besiedlungsfreundliche Oberfläche auf.

Durch die spezielle Mischeinrichtung, bestehend aus strahlenförmig angeordneten Trägern mit an diesen Trägern vorgesehenen Paddeln, findet sowohl eine relative Gleichverteilung der schwebenden Aufwuchstauchkörper in den gewünschten Zonen des Behandlungsbeckens, als auch das portionsweise Durchlüften der Biofilme durch schöpfendes Herausheben eines Teiles der Aufwuchstauchkörper aus dem Wasser in die Atmosphäre statt.

Die höhere Biomassekonzentration ermöglicht die Verkleinerung der Reaktionsräume und des Nachklärvolumens. Es wird eine hohe Prozeßstabilität gegenüber schwankenden Zulaufbedingungen durch gleichmäßige Verteilung der Biomasse auf dem Trägermaterial erreicht. Die Nitrifikation und simultane Denitrifikation im Biofilm wird unterstützt durch anoxische Teilzonen und intermittierende Belüftung. Durch die Anreicherung des Biofilms mit langsam wachsenden Organismenarten kommt es zur weiteren Elimination schwer abbaubarer organischer Stoffe. Die Bläh- und Schwimmschlammbildung wird somit gering gehalten.

Der biologisch entstehende Klärschlamm ist mengenmäßig reduziert gegenüber dem biologischen Überschußschlamm eines Belebtschlammsystems mit ausschließlich suspendierten Flocken der Mikroorganismen und herkömmlichen Tauchkörperverfahren. Er genügt bei Schlammstabilisierung den Anforderungen an eine landwirtschaftliche Klärschlammverwertung.

Ein weiterer Vorteil der erfindungsgemäßen Vorrichtung ist die unproblematische extensive Erweiterung von bestehenden Anlagen durch die Gestaltung beliebig großer Abwasserbehandlungsbecken in horizontaler Richtung (hintereinander, nebeneinander) im Gegensatz zu Vorrichtungen, die an vertikale Abwasserströme gebunden sind und somit durch die Bauhöhe technisch und ökonomisch eingeschränkt sind.

Das Schlammalter ist durch Trägerfixierung erhöht und Nitrifikanten können besser wachsen, woraufhin die Reinigungsleistung steigt und die Verweilzeiten des Abwassers verkürzt werden.
Die Erhöhung des sauerstoffzehrenden Flächenanteils hat zur Folge, daß im Übergangsbereich von oxischer zu anoxischer Betriebsweise analog zum Verfahren der simultanen aeroben Schlammstabilisierung gearbeitet werden kann. In den anoxischen Teilzonen wird die Denitrifikation, die simultane Schlammstabilisierung und biologische Phosphorelimination des Belebungsvolumens erweitert und gezielt gefördert. Ein weiterer Vorteil der Erfindung ist die einfache Erweiterung der Kapazität bestehender Anlagen durch Integration der neu entwickelten Komponenten und die wirkungsvolle Elimination der Stickstoff- und Phosphorverbindungen.

Zur weiteren Erläuterung der Erfindung wird auf die Patentansprüche verwiesen. Einzelheiten, Merkmale und Vorteile der Erfindung ergeben sich aus der nachfolgenden Beschreibung von Ausführungsbeispielen mit Bezugnahme auf die zugehörigen Zeichnungen. Es zeigen:
- Fig. 1:: Abwasserbehandlungsbecken mit Paddeln
- Fig. 2:: Abwasserbehandlungsbecken mit zwei Zonen, verschiedenen Aufwuchstauchkörpern und Paddeln und zusätzlicher Belüftungseinrichtung
- Fig 3:: Schematische Darstellung eines Abwasserbehandlungsbeckens mit 3 Zonen
- Fig. 4:: Schnittprofile von Paddeln
- Fig. 5:: Vorrichtung mit Luftanreicherung des Rücklaufschlammes
- Fig. 6:: Schnittprofil eines doppelwandigen Paddels mit Zwischenraum und Xylithfüllung
- Fig. 7:: Schnittprofile von Paddeln mit Aufnahmeblechen
- Fig. 8:: Ausgestaltung der Paddel als Körbe

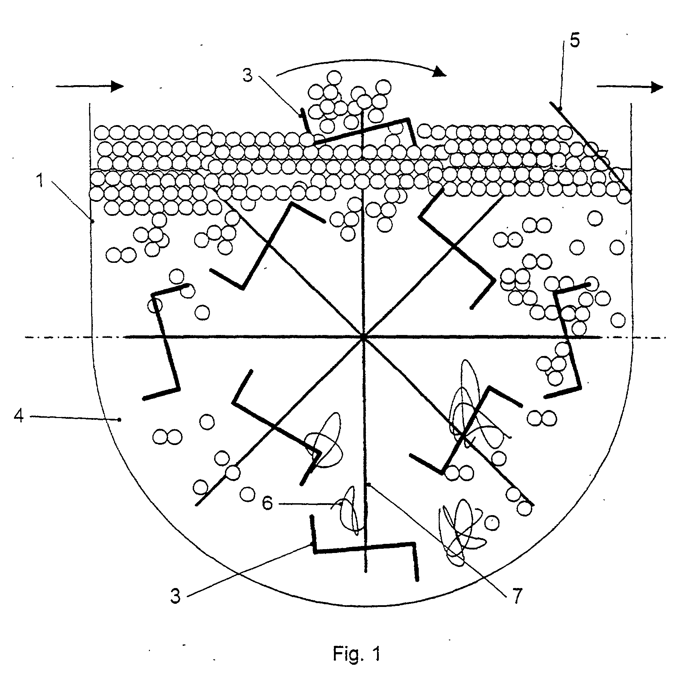

Eine Einbeckenanlage zur intensivierten biologischen Abwasseraufbereitung mit Hilfe von frei beweglichen Aufwuchstauchkörpern 2, mechanischer Durchmischung 3, 7 und zonalem Belebtschlammanteil 6 in einem mit Abwasser 4 gefülltem Reaktionsraum geht aus Fig. 1 hervor. Die Mischeinrichtung 7 kann mit Paddeln 3 ausgeführt sein.

Die Einbeckenanlage kombiniert die Hoch- und Schwachlaststufe der Abwasseraufbereitung und wird mit oder ohne (in der dargestellten Anlage) zusätzlicher Belüftung über den Boden ausgeführt. Die Aufwuchstauchkörper 2 bestehen aus einem Kunststoff-Agglomerat mit stark strukturierter Oberfläche und einer Korngröße von 10-15 mm oder aus Xylith, ein Naturstoff in Form fossiler Pflanzenreste. die als Abprodukt bei der Braunkohlenförderung anfallen und preiswert verfügbar sind und besonders Nitrifikanten immobilisieren. Die weiterhin in Fig. 1 eingetragenen Bezugszeichen 1 und 5 stehen für das Abwasserbehandlungsbecken 1 bzw. für die Rückhaltevorrichtung 5.

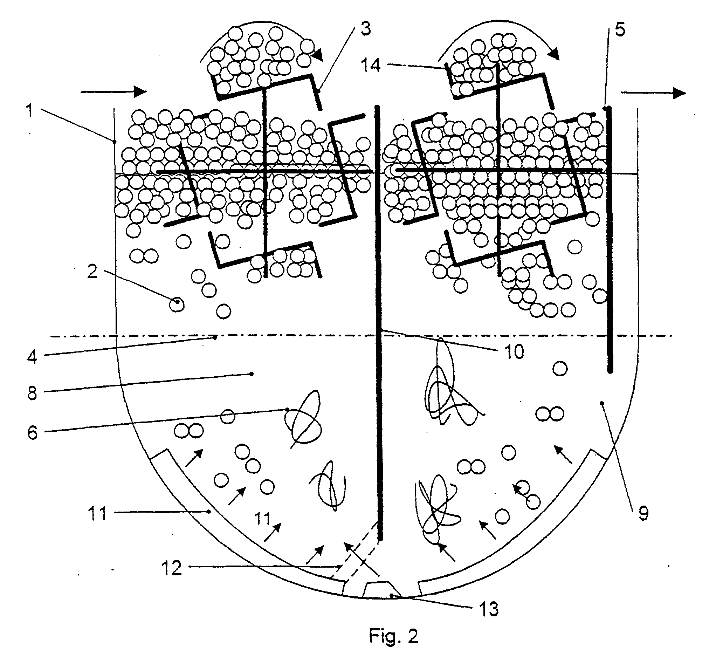

Eine Anlage in der Kombination von Mischeinrichtung 7 mit Paddeln 3 und frei beweglichen Aufwuchstauchkörpern 2 sowie Belebtschlammanteil 6 ist in Fig. 2 dargestellt. In getrennten Reaktionsräumen, die jeweils eine Mischeinrichtung 7 mit Paddeln 3 aufweisen, werden spezifische Mikroorganismen immobilisiert. Das Abwasserbehandlungsbecken 1 ist durch eine Trennwand 10 in zwei Zonen 8 und 9 geteilt, die am Boden des Abwasserbehandlungsbeckens durch Öffnungen miteinander in Verbindung stehen. Als Bodenrückhaltevorrichtung 12 für Aufwuchstauchkörper 2 wirkt ein siebartiger Einbau, welcher durch eine speziell gerichtete Lufteintragsdüse 13 von Verstopfungen freigehalten wird. Die Zonen werden durch Mischeinrichtungen 7, welche sowohl als Paddel 3, als auch als andere rotierende Tauchkörper ausgeführt sein können, durchmischt. Am geometrischen äußeren Umfang der Mischeinrichtungen sind Bürsten bzw. Abstreifer 14 installiert, um die Rückhaltevorrichtung 5 von Aufwuchstauchkörpern 2 freizuhalten. Die Rückhaltevorrichtung 5 ist in diesem Ausführungsbeispiel als Tauchwand ausgeführt. Für eine zusätzliche Belüftung bzw. den Luftsauerstoffeintrag sind Belüftungseinrichtungen 11 am Boden des Abwasserbehandlungsbeckens 1 vorgesehen. Der Eintrag von Luftsauerstoff wird zonenspezifisch über Verdichter geregelt.

Die Schaffung optimaler spezifischer Lebensbedingungen für die Mikroorganismen in den Reaktionszonen zum Schmutzfracht- und Nährstoffabbau ist durch die Variation des Trägermaterials, dessen Anteil am Gesamtvolumen und dem Sauerstoffeintrag durch Verdichter und / oder mechanischer Umwälzung gegeben. Dabei wird die Sauerstoffzufuhr zu den Aufwuchsflächen der Aufwuchstauchkörper 2 durch das Herausheben derselben bzw. die schöpfende Wirkung der Paddel (Schöpfprofile) 3 erreicht. Das Herausheben der Aufwuchstauchkörper 2 und das anschließende Untertauchen an einer anderen Stelle der jeweiligen Zone 8, 9 gewährleistet einen intensivierten Belüftungseffekt. Eine bessere Sauerstoffausnutzung wird außerdem durch die sich zusammenballenden und in einem losen, flächigen Verbund wirkenden Aufwuchstauchkörper 2 durch das Zurückhalten und Behindern des Aufperlens der am Boden über die Belüftungseinrichtungen 11, 13 eingetragenen Luftblasen ermöglicht.

Als Aufwuchstauchkörper 2 werden in der ersten Zone 8 Körper aus HDPE-Rec, einem Kunststoffrecyclingmaterial mit strukturierter Oberfläche und in der zweiten Zone 9 Körper aus Xylith eingesetzt. Statt Xylith werden in dieser Zone auch die im folgenden näher bezeichneten nährstoffangereicherten Kunststoff-Agglomerate vorteilhaft eingesetzt. Die Materialauswahl für die Aufwuchstauchkörper 2 unterstützt in den Zonen die Nitrifikation, Denitrifikation und Schlammstabilisierung.

Weiterhin werden spezielle frei bewegliche Aufwuchstauchkörper 2 eingesetzt, welche durch Agglomerisation, beispielsweise durch Verschmelzen mittels Reibungswärme, entstehen. Diese speziellen frei beweglichen Aufwuchstauchkörper 2 können dabei aus verschiedenen Grundmaterialien aufgebaut sein. Die Grundmaterialien bestehen chemisch aus dem Kunststoff Polypropylen. Vorteilhaft ist die Kombination von verschiedenen Grundmaterialien, was zu gezielten Oberflächeneigenschaften und Strukturen führt. Die Oberfläche der Agglomerate ist stark vergrößert und für Mikroorganismen besiedlungsfreundlich.

Es werden als Grundmaterialien beispielsweise von der Firma Hoechst die Komponenten PPH 2150 und PPH 2250 zu Aufwuchstauchkörpern 2 agglomeriert. Weitere Grundmaterialien stellen die Produkte der Firma BASF mit Novoden 1300 Z und der Firma PCD mit Daplen BE 50 dar. Es sind verschiedene Kombinationen der Grundmaterialien möglich.

Besonders vorteilhaft ist die Beimischung von Nährstoffen zu den Grundmaterialien vor dem Agglomerieren. Die beigemischten Nährstoffe bieten in feinster bis grober Verteilung in den Aufwuchstauchkörpern 2 den Mikroorganismen optimale Lebensbedingungen und fördern die Ansiedlung und das Wachstum der Mikroorganismen.

Durch die Beimengung von Nährstoffen zu den Aufwuchstauchkörpem 2 wird überraschender weise ein zusätzlicher Effekt erzielt. Es wird möglich, durch die gezielte Zugabe von Kohlenstoff- Stickstoff- oder Phosphorverbindungen spezifische Mikroorganismen auf den Aufwuchstauchkörpern 2 anzusiedeln. Derartig angereicherte Aufwuchstauchkörper 2 werden in den Abwasserbehandlungszonen differenziert eingesetzt.

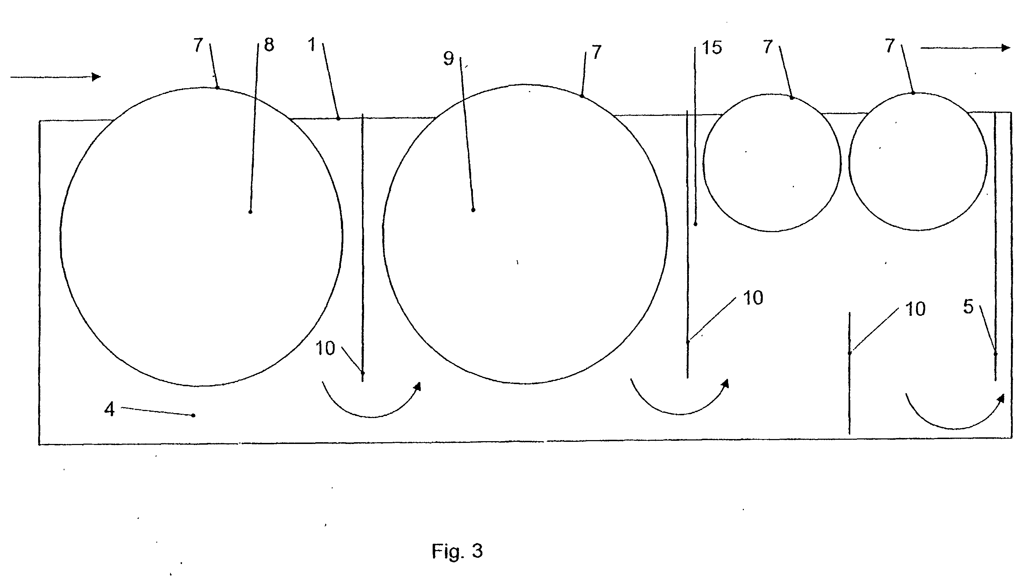

Fig. 3 zeigt in schematischer Darstellung eine 3-stufigen Abwasserbehandlungsanlage. Auf zwei Zonen 8, 9 mit über die ganze Höhe arbeitenden Mischeinrichtungen 7 folgt eine Zone 15 mit zwei gegenläufigen, intensiv an der Flüssigkeitsoberfläche Luftsauerstoff eintragenden Mischeinrichtungen 7.

Alternativ oder ergänzend zur feinblasigen Belüftung wird die Sauerstoffzufuhr für die sessilen und suspendierten Mikroorganismen in der biologischen Verfahrensstufe durch die Luftanreicherung des aus der Nachklärung in das Abwasserbehandlungsbecken 1 geförderten Rücklaufschlammes erzielt. Durch die aktive und intensive Vermischung der Flüssig- und Gasphase mit Förder- und Mischelementen, z.B. Mehrphasenpumpen, wird ein hoher Dispersionsgrad erreicht und der Luftsauerstoff unmittelbar an die zurückgeführte Biomasse angelagert. Der Lösegrad der eingetragenen Luft kann dabei bis zu 100% erreichen. Bei Eintritt in das Abwasserbehandlungsbecken 1 bilden sich jc nach Sättigungsdruck bei der Entspannung des Rücklaufschlamm-Luft-Gemisches 21 Blasen mit einem Durchmesser von ca. 30µm mit einer großen Oberfläche zum Gasaustausch, was wiederum zu einer hohen Ausnutzung des Sauerstoffes durch die Mikroorganismen im Abwasserbehandlungsbecken 1 führt.

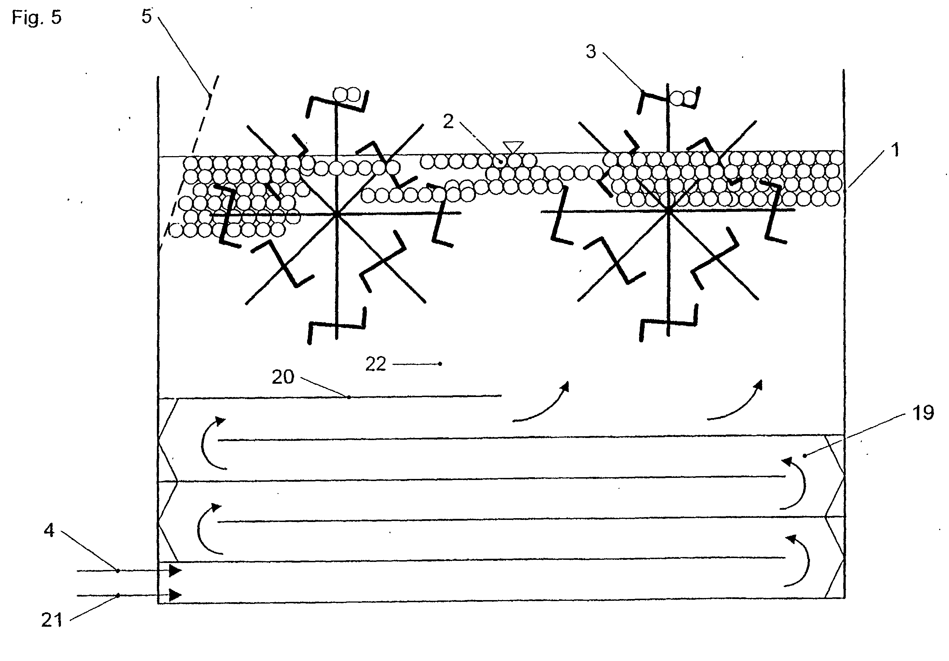

Zur Erhöhung der Sauerstoffausnutzung bei Lufteintrag in den Rücklaufschlamm über aktive Förder- und Mischelemente oder bei Lufteintrag über Verdichter in den Rücklaufschlamm oder in das Abwasser 4 wird das mit dem Abwasser 4 gemischte Rücklaufschlamm-Luft-Gemisch 21 im unteren Beckenteil in einem Kanalsystem zwangsgeführt. In Fig. 5 wird gezeigt, wie durch horizontal angeordnete Kanäle 19 die Verweilzeit der Luft im Abwasserstrom verlängert wird und damit die Sauerstoffausnutzung durch die Mikroorganismen wesentlich verbessert wird. Die Kanalwände 20 können dabei als Kunststoffplatten mit für Mikroorganismen besiedlungfreundlichen und strukturierten Oberflächen ausgebildet sein, was zu einer weiteren Erhöhung des sessilen Anteils der Mikroorganismen in der Vorrichtung führt. Die Strömungsquerschnitte der Kanäle 19 sind dabei so gestaltet, daß eine ausreichende Strömungsgeschwindigkeit vorhanden ist, die das Absetzen der Schlammflocken des Rücklaufschlammes in den Kanälen 19 verhindert.
Im oberen Bereich des Abwasserbehandlungsbeckens 1 wird der Eintrag von Luftsauerstoff über die frei beweglichen Aufwuchstauchkörper 2 gesichert.
Über eine Regelstrecke mit Messung des O₂-Gehaltes im Abwasserbehandlungsbecken 1 und Ansteuerung des Lufteintrags kann unterhalb der frei beweglichen Aufwuchstauchkörper 2 und oberhalb der Kanaleinbauten eine anoxische Zone 22 geschaffen werden.
Eine weitere vorteilhafte Ausführungsform ist die Kombination der frei beweglichen Aufwuchstauchkörper 2 mit einem Festbett, dessen Kanäle schräg-vertikal von unten nach oben durchströmt werden, wobei der Lufteintrag am Beckenboden erfolgt.

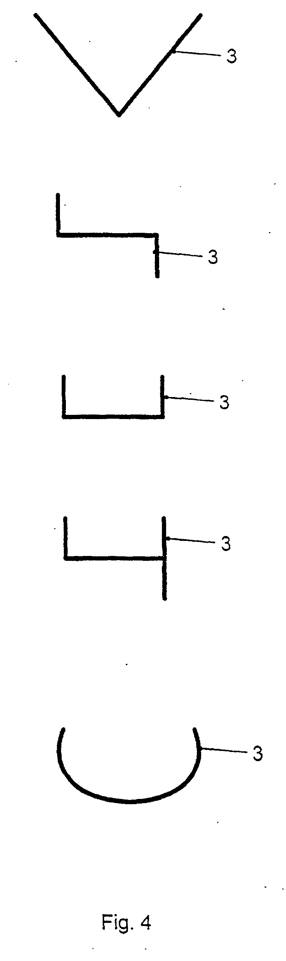

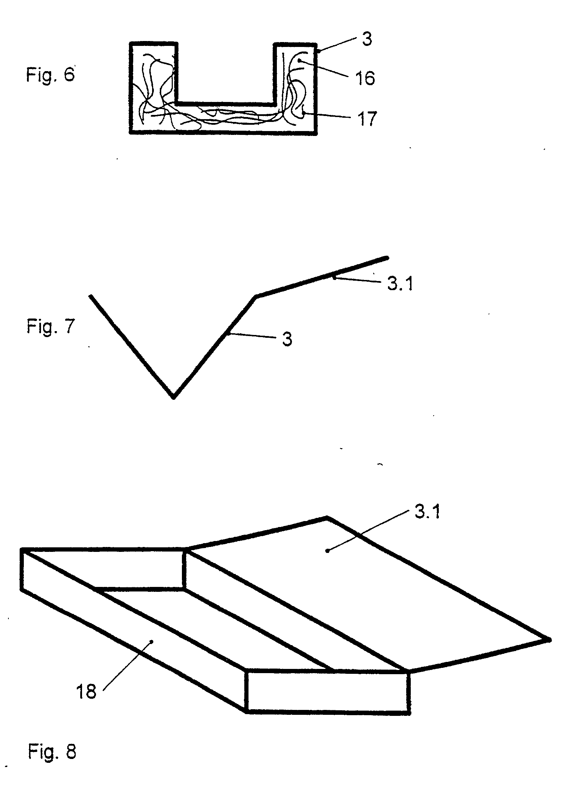

Große Bedeutung für die Effizienz der Anlage besitzt die Ausgestaltung der Paddel 3. Neben den in Fig. 4 dargestellten Grundformen lassen sich die Paddel 3 vorteilhaft in doppelwandiger Ausführung gestalten. In Fig. 6 ist dargestellt. wie der Zwischenraum 16 eines doppelwandigen Paddels 3 mit faserförmigen Xylith 17 ausgefüllt ist. Es werden damit zusätzliche, intensivst belüftete und von Abwasser durchströmte Aufwuchsflächen für die Mikroorganismen zur Verfügung gestellt. Durch das Herausheben der Paddel 3 in die Atmosphäre findet eine ausreichende Sauerstoffversorgung der Mikroorganismen auf dem Xylith 17 statt. Überschüssiger Sauerstoff wird durch Diffusion beim Eintauchen an das Wasser abgegeben.

Eine weitere vorteilhafte Vergrößerung der Aufwuchsfläche und der Menge an bewegten Aufwuchstauchkörpern 2 stellen die in Fig. 7 skizzierten Aufnahmebleche 3.1 dar. Mit den Aufnahmeblechen 3.1 können die verschiedenen Grundformen der Paddel 3 zur Erhöhung der Aufnahmekapazität versehen werden.

In Fig. 8 wird gezeigt, wie die Paddel 3 zur weiteren Erhöhung der Wirksamkeit der Vorrichtung als Körbe 18 ausgebildet sind. Es werden mittels der Körbe 18 eine größere Anzahl von Aufwuchstauchkörpern 2 aus dem Wasser herausgehoben und belüftet.

### LISTE DER BEZUGSZEICHEN

- 1: Abwasserbehandlungsbecken
- 2: frei bewegliche Aufwuchstauchkörper
- 3.: Paddel (Schöpfprofile)
- 3.1: Aufnahmebleche
- 4: Abwasser
- 5: Rückhaltevorrichtung für frei bewegliche Aufwuchstauchkörper
- 6: Belebtschlammanteil
- 7: Mischeinrichtungen
- 8: Zone 1
- 9: Zone 2
- 10: Trennwand
- 11: Belüftungseinrichtungen
- 12: Bodenrückhaltevorrichtung
- 13: Lufteintragsdüse
- 14: Bürste / Abstreifer
- 15: Zone 3
- 16: Zwischenraum
- 17: Xylith
- 18: Körbe
- 19: Kanal
- 20: Kanalwand
- 21: Rücklaufschlamm-Luft-Gemisch
- 22: anoxische Zone

## Patentansprüche

1. Vorrichtung zur intensivierten biologischen Abwasseraufbereitung, bestehend aus einem Abwasserbehandlungsbecken (1) und frei beweglichen Aufwuchstauchkörpem (2), wobei jeweils eine Anzahl der frei beweglichen Aufwuchstauchkörper (2) durch eine Mischeinrichtung (7) aus dem Abwasserbehandlungsbecken (1) schöpfend herausgehoben werden, sich während des Mischvorgangs zeitweise innerhalb und außerhalb des Abwassers (4) befinden und gleichzeitig durch die Mischeinrichtung (3) im Becken umgewälzt werden, **dadurch gekennzeichnet, daß**
die Mischeinrichtung (7) aus strahlenförmigen Trägem besteht, welche mit Paddeln (3) versehen sind und die Paddel (3) in unterschiedlichem Abstand zum Mittelpunkt der Mischeinrichtung (7) beweglich angeordnet sind und das weiterhin die frei beweglichen Aufwuchstauchkörper (2) im gesamten Abwasserbehandlungsbecken (1) verteilt und frei beweglich sind und durch Rückhaltevorrichtungen (5) im Abwasserbehandlungsbecken (1) gehalten werden.

2. Vorrichtung nach Anspruch 1, **dadurch gekennzeichnet, daß**
die frei beweglichen Aufwuchstauchkörper (2) aus Xylith bestehen und Nitrifikanten bevorzugt immobilisieren.

3. Vorrichtung nach Anspruch 1, **dadurch gekennzeichnet, daß**
die frei beweglichen Aufwuchstauchkörper (2) aus Kunststoffrecyclingmaterial mit strukturierter Oberfläche, Hochdruckpolyethylen HDPE-REC, bestehen.

4. Vorrichtung nach Anspruch 1, **dadurch gekennzeichnet, daß**
die frei beweglichen Aufwuchstauchkörper (2) und / oder in die Vorrichtung integrierte Aufwuchsflächen aus Polypropylen bestehen.

5. Vorrichtung nach Anspruch 4, **dadurch gekennzeichnet, daß**
die frei beweglichen Aufwuchstauchkörper (2) als Agglomerat aus verschiedenen Grundrnaterialien hergestellt sind und eine stark strukturierte Oberfläche aufweisen.

6. Vorrichtung nach Anspruch 5, **dadurch gekennzeichnet, daß**
die Grundmaterialien der frei beweglichen Aufwuchstauchkörper (2) durch Wärmeeinwirkung agglomeriert sind.

7. Vorrichtung nach Anspruch 5 oder 6, **dadurch gekennzeichnet, daß**
die frei beweglichen Aufwuchstauchkörper (2) eine Korngröße von 6 bis 20 mm aufweisen.

8. Vorrichtung nach einem der Ansprüche 4 bis 7,
**dadurch gekennzeichnet, daß**
die frei beweglichen Aufwuchstauchkörper (2) und / oder die in die Vorrichtung integrierten Aufwuchsflächen aus Polypropylen Nährstoffe für Mikroorganismen enthalten.

9. Vorrichtung nach einem der Ansprüche 2 bis 8,
**dadurch gekennzeichnet, daß**
die Aufwuchstauchkörper (2) durch einen geringen Dichteunterschied zum Abwasser (4) mit relativer Gleichverteilung in den gewünschten Zonen des Behandlungsbeckens darin schwimmend und / oder schwebend angeordnet sind.

10. Vorrichtung nach Anspruch 1, **dadurch gekennzeichnet, daß**
das Abwasserbehandlungsbecken (1) durch eine Trennwand (10) in mindestens zwei Zonen (8,9) geteilt ist, die am Boden des Abwasserbehandlungsbeckens (1) oder oberflächig durch Öffnungen miteinander in Verbindung stehen und in den Zonen (8,9) Mischeinrichtungen (7) mit Paddeln (3) vorhanden sind.

11. Vorrichtung nach Anspruch 10, **dadurch gekennzeichnet, daß**
die Aufwuchstauchkörper (2) in der ersten Zone (8) aus HDPE-REC und in der zweiten Zone (9) aus Xylith oder mit Nährstoffen angereicherten Kunststoffagglomeraten bestehen.

12. Vorrichtung nach Anspruch 1, **dadurch gekennzeichnet, daß**
die Paddel (3) aus perforierten und wasserdurchlässigen Flächen oder flächigen Formkörpern bestehen.

13. Vorrichtung nach Anspruch 12, **dadurch gekennzeichnet, daß**
die wasserdurchlässigen Flächen als Lochbleche ausgeführt sind.

14. Vorrichtung nach einem der Ansprüche 1 bis 13, **dadurch gekennzeichnet, daß**
die Paddel (3) doppelwandig ausgerührt sind und in den Zwischenräumen (16) zwischen den Wandungen Xylith (17) oder Aufwuchstauchkörper (2) eingebracht sind.

15. Vorrichtung nach einem der Ansprüche 1 bis 14, **dadurch gekennzeichnet, daß**
die Paddel (3) als Körbe (18) ausgebildet sind.

16. Vorrichtung nach einem der Ansprüche 1 bis 15, **dadurch gekennzeichnet, daß**
die Paddel (3) und/oder die Körbe (18) zusätzliche Aufnahmebleche (3.1) enthalten.

17. Vorrichtung nach Anspruch 1, **dadurch gekennzeichnet, daß**
für eine feinblasige Belüftung Belüftungseinrichtungen (11) am Boden des Abwasserbehandlungsbeckens (1) vorgesehen sind, wobei der Eintrag von Luftsauerstoff über Verdichter zonenspezifisch regelbar ist.

18. Vorrichrung nach Anspruch 1, **dadurch gekennzeichnet, daß**
die Sauerstoffzufuhr in das Abwasserbehandlungsbecken (1) durch Lufteintrag in den Rücklaufschlamm oder das Abwasser (4) mit Hilfe von Mehrphasenpumpen mit Flüssigkeits-Gasgemisch-Förderung erzielt wird oder zusätzlich zur feinblasigen Belüftung erfolgt

19. Vorrichnmg nach Anspruch 18, **dadurch gekennzeichnet, daß**
im unteren Teil des Abwasserbehandlungsbeckens (1) eine Zwangsführung des mit Luftsauerstoff angereicherten Gemischs aus Rücklaufschlamm (21) und Abwasser (4) in Kanälen (19) erfolgt.

20. Vorrichtung nach Anspruch 19, **dadurch gekennzeichnet, daß**
die Kanäle (19) von Kanalwänden (20) begrenzt werden, die eine für Mikroorganismen besiedlungsfreundliche strukturierte Oberfläche aufweisen.

21. Vorrichtung nach Anspruch 20, **dadurch gekennzeichnet, daß**
die Kanäle (19) horizontal angeordnet sind oder eine leichte Steigung aufweisen und dabei von unten nach oben durchströmt werden.

## Claims

1. Device for intensive biological waste-water treatment that consists of a waste-water treatment basin (1) and immersed biofilm bodies (2) free to move whereby a number of these freely moving immersed biofilm bodies (2) are lifted from the waste-water treatment basin
(1) by a mixing device (7) thereby scooping, during mixing are temporarily inside, temporarily outside of the waste water (4) and simultaneously are rolled in the basin by the mixing device (7),
**characterized in that** the mixing device (7) consists of radial carriers which are equipped with paddles (3) whereby the paddles (3) are movably arranged in different distances from the centre of the mixing device (7) and, further, the freely moving immersed biofilm bodies
(2) are distributed over and free to move in the entire waste-water treatment basin (1) and are held in the waste-water treatment basin (1) by detention devices (5).

2. Device to Claim 1
**characterized in that** the freely moving immersed biofilm bodies (2) consist of xylite and preferably immobilize nitrifying bacteria.

3. Device to Claim 1
**characterized in that** the freely moving immersed biofilm bodies (2) consist of a plastic recycling material with structured surface, high-pressure polyethylene LDPE-REC.

4. Device to Claim 1
**characterized in that** the freely moving immersed biofilm bodies (2) and/or biofilm surfaces integrated into the device consist of polypropylene.

5. Device to Claim 4
**characterized in that** the freely moving immersed biofilm bodies (2) as agglomerates are made from various basic materials and have an intensely structured surface.

6. Device to Claim 5
**characterized in that** the basic materials of the freely moving immersed biofilm bodies (2) have been agglomerated by thermal effects.

7. Device to Claim 5 or 6
**characterized in that** the freely moving immersed biofilm bodies (2) have a grain size of 6 to 20 mm.

8. Device to any of the Claims 4 to 7
**characterized in that** the freely moving immersed biofilm bodies (2) and/or the biofilm surfaces of polypropylene integrated into the device contain nutrients for microorganisms.

9. Device to any of the Claims 2 to 8
**characterized in that** the immersed biofilm bodies (2) are arranged in swimming and/or suspended condition due to a small difference in their density to that of the waste water (4) in the required zones of the treatment basin with a relative equidistribution.

10. Device to Claim 1
**characterized in that** the waste-water treatment basin (1) is divided by a partition (10) into, at least, two zones (8, 9) which are connected with each other near to the bottom of the waste-water treatment basin (1) or near to the surface by openings, and there are mixing devices (7) with paddles (3) in the zones (8, 9).

11. Device to Claim 10
**characterized in that** the immersed biofilm bodies (2) consist of LDPE-REC in the first zone (8) and of xylite or plastic agglomerates enriched with nutrients in the second zone (9).

12. Device to Claim 1
**characterized in that** the paddles (3) consist of perforated surfaces or flat formed bodies permeable to water.

13. Device to Claim 12
**characterized in that** the surfaces permeable to water are made as punched plates.

14. Device to any of the Claims 1 to 13
**characterized in that** the paddles (3) are double-walled and xylite (17) or immersed biofilm bodies (2) are placed in the spaces (16) between the walls.

15. Device to any of the Claims 1 to 14
**characterized in that** the paddles (3) are designed as baskets (18).

16. Device to any of the Claims 1 to 15
**characterized in that** the paddles (3) and/or the baskets (18) contain additional gathering plates (3.1).

17. Device to Claim 1
**characterized in that** for fine-sparkling aeration, aeration devices (11) are provided at the bottom of the waste-water treatment basin (1) able to control the air oxygen infeed specific to the zone.

18. Device to Claim 1
**characterized in that** the oxygen infeed into the waste-water treatment basin (1) is realized by the infeed of air into the return sludge or the waste water (4) using multiple-phase pumps for liquid-gas mixture delivery or takes place additionally to the fine-sparkling aeration.

19. Device to Claim 18
**characterized in that** in the lower part of the waste-water treatment basin (1) the mixture of return sludge (21) and waste water (4) enriched with air oxygen is forced to flow in channels (19).

20. Device to Claim 19
**characterized in that** the channels (19) are confined by channel walls (20) that have a structured surface positive towards the settling of microorganisms.

21. Device to Claim 20
**characterized in that** the channels (19) are arranged horizontal or with a slight slope and are passed from below upwards.

## Revendications

1. Dispositif de traitement biologique intensif des eaux usées, composé d'un bassin de traitement des eaux usées (1) et de plongeurs mobiles à biotecton (2), dont un certain nombre desquels sont à l'extérieur à l'aide d'un dispositif de mélange (7), se trouvant ainsi temporairement dans l'eau et hors de l'eau (4) lors du mélangeage, le dispositif de mélange (3) les met en même temps en circulation dans le bassin qui est **caractérisé par** un dispositif de mélange (7) composé de supports rayonnés munis d'ailettes (3), ces dernières (3) sont aménagées de façon mobile à des distances différentes du centre du dispositif de mélange (7), ainsi que par le fait que les plongeurs mobiles à biotecton (2) sont dispersés dans tout le bassin de traitement des eaux usées (1), qu'ils sont à mouvement libre et qu'ils sont tenus dans le bassin de traitement des eaux usées (1) à l'aide de dispositifs de retenue (5).

2. Dispositif selon revendication 1, **caractérisé par** des plongeurs mobiles à biotecton (2) composés de xylite et immobilisant surtout les bactéries nitriques.

3. Dispositif selon revendication 1, **caractérisé par** des plongeurs mobiles à biotecton (2) en matière synthétique recyclée à surface structurée, notamment de polyéthylène haute pression, HDPE-REC.

4. Dispositif selon revendication 1, **caractérisé par** des plongeurs mobiles à biotecton (2) et/ou des surfaces de contact intégrées (2) dans ce dispositif qui sont en polypropylène.

5. Dispositif selon revendication 4, **caractérisé par** des plongeurs mobiles à biotecton (2) fabriqués comme agglomérat de différentes matières de base et par leur superficie fortement structurée.

6. Dispositif selon revendication 5, **caractérisé par** le fait que les matières de base des plongeurs mobiles à biotecton (2) sont agglomérées par action thermique.

7. Dispositif selon revendications 5 ou 6, **caractérisé par** le fait que les plongeurs à biotecton mobiles (2) ont des particules d'une taille de 6 à 20 mm.

8. Dispositif selon l'une des revendications 4 à 7, **caractérisé par** le fait que les plongeurs mobiles à biotecton (2) et/ou les surfaces de contact de polypropylène, intégrées dans le dispositif, contiennent des substances nutritives pour les microorganismes.

9. Dispositif selon l'une des revendications 2 à 8, **caractérisé par** le fait que les plongeurs mobiles à biotecton (2) sont répartis de façon relativement équitable dans les zones désirées à l'intérieur ou à la surface du bassin de traitement, profitant de leur faible différence de masse volumique par rapport aux eaux usées (4).

10. Dispositif selon revendication 1, **caractérisé par** une division du bassin de traitement des eaux usées (1) en deux zones au moins (8, 9), les zones étant séparées au moyen d'une paroi de séparation (10), mais cépendant en contact à travers d'orifices au fond du bassin de traitement des eaux usées (1) ou à la surface de celui-ci, et dans les zones (8, 9), il y a des dispositifs de mélange (7) avec des ailettes (3).

11. Dispositif selon revendication 10, **caractérisé par** le fait que les plongeurs mobiles à biotecton (2) sont composés de HDPE-REC dans la première zone (8) et de xylite ou de matières synthétiques agglomérées enrichies en substances nutritives dans la deuxième zone (9).

12. Dispositif selon revendication 1, **caractérisé par** le fait que les ailettes (3) sont composées de surfaces perforées perméables à l'eau ou de pièces moulées plates.

13. Dispositif selon revendication 12, **caractérisé par** l'exécution des surfaces perméables à l'eau en forme de tôles perforées.

14. Dispositif d'après l'une des revendications 1 à 13, **caractérisé par** des ailettes (3) à double paroi et par des espaces intermédiaires (16) où l'on introduit entre les parois du xylite (17) ou des plongeurs mobiles à biotecton (2).

15. Dispositif selon l'une des revendications 1 à 14, **caractérisé par** des ailettes (3) en forme de paniers (18).

16. Dispositif selon l'une des revendications 1 à 15, **caractérisé par** des ailettes (3) et/ou des paniers (18) contenant des tôles d'absorption supplémentaires (3.1).

17. Dispositif selon revendication 1, **caractérisé par** des dispositifs d'aération (11) aménagés au fond du bassin de traitement des eaux usées (1) en vue d'une aération à bulles fines, l'apport de l'oxygène atmosphérique y étant réglable pour chacune des zones à l'aide de compresseurs.

18. Dispositif selon revendication 1, **caractérisé par** le fait que l'introduction d'oxygène dans le bassin de traitement des eaux usées (1) est faite par insufflation d'air dans les boues de reflux ou dans les eaux usées (4) à l'aide de pompes polyphasées avec refoulement d'un mélange de liquides et de gaz ou s'effectue en plus de l'aération à bulles fines.

19. Dispositif selon revendication 18, **caractérisé par** un guidage forcé dans la partie basse du bassin de traitement des eaux usées (1), où le mélange des boues de reflux (21) et des eaux usées (4) enrichi d'oxygène atmosphérique s'effectue dans des canaux (19).

20. Dispositif selon revendication 19, **caractérisé par** le fait que les canaux (19) sont entourés par les parois de canal (20), qui disposent d'une surface structurée afin de stimuler la culture d'une flore de microorganismes.

21. Dispositif selon revendication 20, **caractérisé par** le fait que les canaux (19) sont aménagés horizontalement ou avec une légère pente, de façon à ce que le mélange puisse circuler de bas en haut.
